# EUROPEAN PATENT APPLICATION

(11) **EP 4 563 341 A1**
(43) Date of publication of application: **04.06.2025**
(21) Application number: 22952615.7
(22) Date of filing: 12.08.2022
(51) Int. Cl.: B32B 27/08, B32B 27/34, B32B 27/40, A61C 7/00, A61C 7/08, C08L 77/00, C08L 75/04, C08J 5/18, B29C 48/08

(54) **HIGH-STRESS-RETENTION MULTILAYER POLYMER FILM, AND MANUFACTURING METHOD THEREFOR AND PRODUCT THEREOF**

(30) Priority: 26.07.2022 CN 202210888666
(71) Applicant: Shanghai Uretech Film Material Co., Ltd., Shanghai 201108 (CN)
(72) Inventor: ZHAO, Tingting, Shanghai 201108 (CN)
(74) Representative: Argyma
(86) International application number: PCT/CN2022/111985
(87) International publication number: WO 2024/021171

(57) **Abstract**

The invention relates to a multilayer polymer membrane and a manufacturing method therefor, a use and a method of using the multilayer polymer membrane for producing a molded body, and a molded body obtained by manufacturing. The multilayer polymer membrane includes a hard core layer and a soft skin layer, wherein the hard core layer includes one or more polymer layers, a material of each of the polymer layers of the hard core layer includes at least one transparent polyamide, and a glass transition temperature Tg of transparent polyamide of each layer is between 100°C and 200°C; each of the soft skin layers includes one or more polymer layers, and each of the polymer layers of each of the soft skin layers includes at least one thermoplastic polyurethane or polyamide elastomer with a Shore hardness of 50D to 85D. The multilayer polymer membrane provided by the invention has excellent transparency, is resistant to cracking caused by environmental stress, and has the ability to stably maintain high stress under warm and humid conditions, making it particularly suitable for dental diaphragms.

## Description

### BACKGROUND OF THE INVENTION

### Field of the Invention

The invention relates to a multilayer polymer membrane and a manufacturing method therefor. The invention further relates to a use and a method of using the multilayer polymer membrane for producing a molded body, and a molded body obtained by manufacturing. The multilayer polymer membrane is particularly suitable for the production of three-dimensional molded articles, for example by a thermoforming process, for example for the production of a shell-shaped dental instrument.

### Description of the Prior Art

Compared with the traditional fixed orthodontics, the clear aligner orthodontics is called 'clear aligner' because it does not have rings, brackets, archwires, etc.; the clear aligner orthodontics uses a transparent polymer diaphragm to process an aligner. The aligner is called an 'invisible aligner' or 'invisible braces' because it is difficult to find. In addition, this type of appliance is often called 'shell-shaped dental instrument' because of its shell shape. With the development and integration of modern orthodontics, digital image acquisition and processing technology, rapid prototyping technology and new material technology, since the 1990s, the clear aligner orthodontics has developed vigorously, with representatives such as Align Technology Inc in the United States and Angelalign in China.

Normally, the clear aligner orthodontics uses a transparent polymer diaphragm that is hot-pressed and molded to prepare an braces. After the braces is worn, it provides stress to achieve the slow movement of the patient's teeth to achieve the purpose of correction.

The currently commonly-used transparent polymer diaphragm is a single-layer copolyester diaphragm, of which PETG (polyethylene terephthalate-1,4-cyclohexanedimethanol) is a widely used polymer for orthodontic aligners, and the typical commercially available PETG diaphragm product is for example German Erkodur dental diaphragm. The aligner made of PETG single-layer diaphragm has good stress retention and has good orthodontic effect in the treatment of most cases. However, its shortcoming is that it is prone to cracking and failure in the oral environment and during repeated belt removal.

In response to the above problems, the aligner made by thermoforming a polymer single-layer diaphragm made of another polymer material, thermoplastic polyurethane (TPU), can solve the problem of cracking. Typical commercially available materials for this kind of TPU are for example Straumann's ZenduraA. Although TPU materials can have very high initial stress and modulus, which is helpful for the initial thrust of orthodontic treatment, but it also increases the patient's discomfort and even pain when they first start wearing it. In addition, in the oral environment, the stress of the TPU diaphragm material relaxes rapidly, and the orthodontic force weakens significantly during the orthodontic cycle, making it difficult to ensure the smooth realization of the orthodontic goals, which is a drawback of this material.

To sum up, in the field of clear aligner orthodontics, the orthodontics has many performance requirements for diaphragms, such as transparency, crack resistance, appropriate initial stress, and high and stable stress maintenance under the warm and moist conditions of the oral cavity. These combined requirements pose a challenge for polymer diaphragms used in clear aligners. In particular, at present, the field of clear aligner orthodontics has a more urgent need for diaphragm products that improve stress relaxation and maintain long-term and effective orthodontic force during use. At the same time, developing new material solutions to replace/alleviate the market shortage of certain polymer-based medical materials (such as copolyesters) is also an urgent issue in the industry.

### SUMMARY OF THE INVENTION

The invention provides a multilayer polymer membrane and a manufacturing method therefor, a use and a method of using the membrane for hot-pressing a molded body, and a molded body obtained by manufacturing. The multilayer polymer membrane provided by the invention may be used to prepare diaphragms for transparent invisible braces. The transparent invisible braces prepared by the multilayer polymer membrane have excellent balanced properties in terms of transparency, cracking resistance, initial stress provision, stress maintenance, etc., and has high stress retention under conditions that simulate oral moisturization.

According to one aspect of the invention, the invention provides a multilayer polymer membrane, which includes a hard core layer and soft skin layers located on both sides of the hard core layer, wherein
the hard core layer includes one or more polymer layers, a material of each of the polymer layers of the hard core layer includes one or more transparent polyamides, and the transparent polyamide is selected from amorphous transparent polyamide or microcrystalline transparent polyamide, a glass transition temperature Tg of the transparent polyamide of each layer being between 100°C and 200°C;
each of the soft skin layers includes one or more polymer layer, and a material of each of the polymer layers of each of the soft skin layer includes one or more thermoplastic polyurethanes with a Shore hardness of 50D-85D, or one or more polyamide elastomers with a Shore hardness of 50D-85D.

In the invention, 'Tg is between 100°C and 200°C' means including an endpoint value, i.e., including the case where Tg is 100°C or 200°C, and also includes the case where Tg is a temperature value between 100°C and 200°C.

In the invention, a lower limit of Tg of the transparent polyamide is set to ensure stress retention. The invention sets an upper limit of Tg based on the following considerations: 1. As Tg increases, a molding temperature required for thermoforming also increases, resulting in longer molding time, increased energy consumption, and increased difficulty in accurate positioning; 2. High Tg is often accompanied by higher structural rigidity, and may also easily cause an elongation at break of the material to decrease; 3. If the modulus associated with high Tg increases too much, excessive thrust will be easily caused on the teeth to increase discomfort, which is not conducive to maintaining the willingness of the patient to wear.

The key part of the invention lies in a soft-hard-soft three-layer structure. There is no limit on whether structures of other layers are provided in addition to this three-layer structure.

In some embodiments, the hard core layer is one layer, and the material of this layer may be a transparent polyamide or a mixture of multiple transparent polyamides. In the case where the material is a transparent polyamide, the glass transition temperature Tg of the material is between 100°C and 200°C. In the case where the material is a mixture of multiple transparent polyamides, the mixture may have one or more Tgs due to different component contents or compatibility between components, and all Tgs are in a temperature range of 100°C-200°C.

In some alternative embodiments, the hard core layer may be of a multi-layer structure, and each layer may be one or more of the above transparent polyamides. When a total thickness of the multilayer polymer membrane of the invention is basically constant, for the core layer of the multilayer structure, a thickness of each layer is usually smaller than a thickness of the structure of the layer when there is only one core layer. When the hard core layer is of the multilayer structure, the soft skin layers on both sides may each be of a one-layer structure, or each may be of the multi-layer structure, or the soft skin layer on one side may be of the one-layer structure, and the soft skin layer on the other side may be of the multilayer structure.

In some embodiments, the soft skin layer on each side may be of one layer respectively, and a material of this layer may include one or more thermoplastic polyurethanes with a Shore hardness of 50D-85D, or may further be one or more polyamide elastomers with a Shore hardness of 50D-85D. For example, the structure of the layer on one side may include one or more thermoplastic polyurethanes with a Shore hardness of 50D-85D, and the structure of the layer on the other side may also include one or more thermoplastic polyurethanes with a Shore hardness of 50D-85D; or, the structure of the layer on one side includes one or more polyamide elastomers with a Shore hardness of 50D-85D, and the structure of the layer on the other side also includes one or more polyamide elastomers with a Shore hardness of 50D-85D; and or, the structure of the layer on one side includes one or more polyamide elastomers with a Shore hardness of 50D-85D, and the structure of the layer on the other side includes one or more thermoplastic polyurethanes with a Shore hardness of 50D-85D. In the case of including more polyurethanes, the Shore hardness of each polyurethane ranges from 50D to 85D, and in turn a mixture of more polyurethanes also has a Shore hardness in the range of 50D to 85D.

In some alternative embodiments, the soft skin layer on each side may be of multilayer respectively, and each layer of the above multilayer may include one or more polyamide elastomers with a Shore hardness of 50D-85D, or one or more thermoplastic polyurethanes with a Shore hardness of 50D-85D. For the soft skin layer of the multilayer, some of the layers may be the polyamide elastomer with a Shore hardness of 50D-85D, and other layers may be the thermoplastic polyurethanes with a Shore hardness of 50D-85D.

In some alternative embodiments, alternatively, the soft skin layer on one side of the hard core layer may be a single layer, while the soft skin layer on the other side may be a multilayer. The specific selection and setting for the single layer and the multilayer refer to the above soft skin layer of the single layer and the multilayer.

In the invention, in order to ensure transparency, in a preferred embodiment, the polymers of each layer are not added with a large amount of inorganic fillers, and try not to be compounded with a large amount of other polymers not shown. For example, for the hard core layer, each layer may be a mixture of various transparent polyamides, but may not be expected to be a composite of polyamide and other polymers, nor being added with large amounts of inorganic fillers; for the soft skin layer, each layer may be a mixture of different thermoplastic polyurethanes, or a mixture of different polyamide elastomers, but may not be expected to be a mixture of thermoplastic polyurethanes and polyamide elastomers or a mixture of thermoplastic polyurethanes or polyamide elastomers with other polymers, and may also not be expected to be added with large amounts of inorganic fillers in addition.

In some solutions, any or all layers in the multilayer polymer layer may optionally include some auxiliary substances such as dyes, pigments, heat stabilizers, release agents and other conventional auxiliaries, so as to provide the desired color, stability, processing properties and usability. The total auxiliary substances and the compositions thereof shall be less than 10% by weight, and shall not seriously hinder the overall transparency of the membrane.

In a preferred embodiment, the glass transition temperature Tg of each layer of the transparent polyamide is between 110°C and 170°C, and more preferably between 125°C and 170°C.

In a preferred embodiment, each layer of the transparent polyamide has a light transmittance of greater than 75%, a tensile yield strength greater than 50MPa, a yield strain greater than or equal to 5%, and a tensile modulus greater than 1300MPa.

More preferably, the transparent polyamide has a light transmittance of greater than 80%.

Further, preferably, the multilayer polymer membrane may be processed by grinding with one-sided rollers to further reduces possible light reflections. The grinding will reduce the light transmittance to a certain extent, but the multilayer polymer membrane of the invention may still maintain the light transmittance greater than 80% after the grinding.

In a preferred embodiment, a total thickness of the hard core layer is 300-1200 microns, more preferably 350-1000 microns, even more preferably 500-800 microns; a thickness of each of the soft skin layers is 20-150 microns, more preferably 40-90 microns, and even more preferably 40-75 microns.

In a preferred embodiment, a total thickness of the layered structure composed of the hard core layer and the soft skin layers on both sides is from 500 microns to 1500 microns, more preferably from 600 microns to 1000 microns.

In an embodiment, the multilayer polymer membrane is a diaphragm used to prepare a shell-shaped dental instrument.

According to another aspect of the invention, the invention provides a manufacturing method for the above multilayer polymer membrane, which specifically may be obtained by thermal lamination, extrusion compounding or multilayer co-extrusion.

According to a still another aspect, the invention provides a use of the above multilayer polymer membrane for producing a molded body by hot pressing, and the molded body may be, for example, but not limited to, a shell-shaped dental instrument such as an invisible aligner.

According to a still another aspect, the invention provides a molded body manufactured by hot pressing, which prepared by using the multilayer polymer membrane provided by the invention. Further, preferably, the molded body is a shell-shaped dental instrument such as an invisible aligner.

According to a still another aspect, the invention provides a method for manufacturing the above molded body, which includes steps of:
i) preparing the multilayer polymer membrane through a multilayer co-extrusion or extrusion compounding process;
ii) performing vacuum hot-pressing and/or positive-pressure hot-pressing on the multilayer polymer membrane to obtain the molded body;
iii) trimming and grinding the molded body.

In an embodiment, the molded body is a shell-shaped dental instrument such as an invisible aligner or a retainer.

The shell-shaped dental instrument referred to in the technical solution of the invention usually includes an invisible aligner and a retainer.

The invention has the following beneficial effects:
The multilayer polymer membrane provided by the invention may be obtained by negative-pressure or positive-pressure thermoforming to obtain the required molded body, and the finished product is transparent and has the following excellent performance: resistant to cracking caused by environmental stress under warm and humid conditions, may provide appropriate initial stress, and may stably maintain high stress under warm and humid conditions. Therefore, the polymer membrane of the invention is particularly suitable for use as a dental diaphragm, and is suitable for making the shell-shaped dental instrument such as an invisible aligners.

### BRIEF DESCRIPTION OF THE DRAWINGS

Fig. 1 is a structural schematic diagram of a multilayer polymer membrane with high stress retention according to the invention;
Fig. 2 is a schematic diagram of a diaphragm with obvious microcracks in the stress cracking resistance test;
Fig. 3 is a stress retention curve for Comparative Example 3, Comparative Example 5, and Embodiment 2.

### DESCRIPTION OF THE PREFERRED EMBODIMENTS

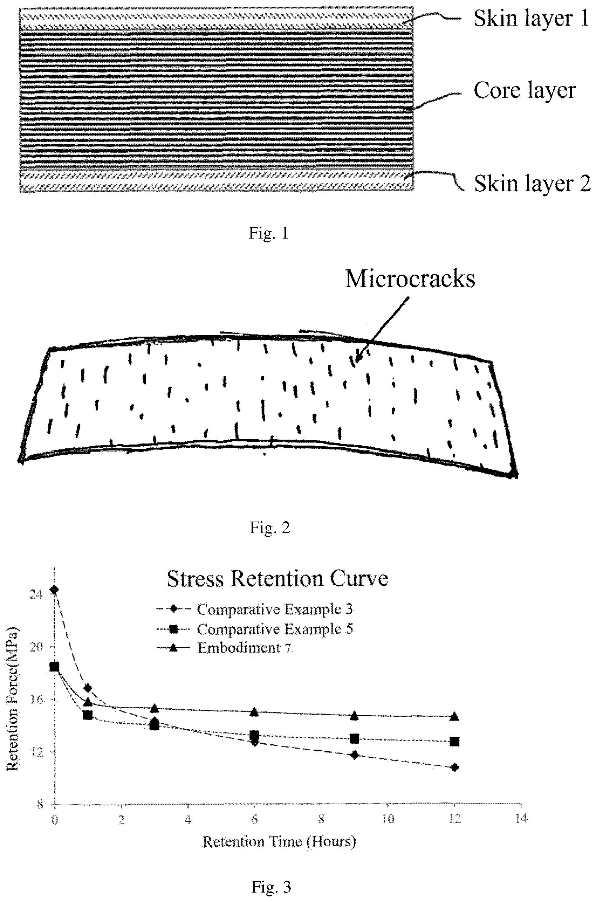

The invention provides a multilayer polymer membrane retained by high stress. The multilayer polymer membrane has a structure as shown in Fig. 1, and includes:
1) a hard core layer, with a total thickness of 300-1200 microns, preferably 350-1000 microns; the hard core layer may include one or more polymer layers, and a material of each of the polymer layers includes at least one transparent polyamide, which is an amorphous transparent polyamide or a microcrystalline transparent polyamide, a glass transition temperature Tg of the transparent polyamide being between 100°C and 200°C (endpoint values inclusive); here, 'at least one' means that each of the polymer layers may include one or more transparent polyamides, wherein when 'more' is included, it may include both amorphous transparent polyamide and microcrystalline transparent polyamide, or it may include more amorphous transparent polyamides, or it may include more microcrystalline transparent polyamides;
2) soft skin layers, located on both sides of the core layer, a thickness of each of the skin layer on each side being 20-150 microns; the skin layer on each side includes one or more polymer layer, and each of the polymer layers includes at least one thermoplastic polyurethane with a Shore hardness of 50D-85D, or at least one polyamide elastomer with a Shore hardness of 50D-85D.

The 'hard' and 'soft' defined above are relative concepts, which means that the core layer is harder than the skin layer, and the skin layer is softer than the core layer. The related properties defined by 'soft' and 'hard' are hardness and stiffness.

Amorphous or microcrystalline transparent polyamides suitable for use in the hard core layer include polyamides with aromatic/semi-aromatic structures or polyamides with linear aliphatic structures, more preferably transparent polyamides formed by random copolymerization or block copolymerization by selecting diamines and dibasic acids with side chains and cyclic structures and linear dibasic acids and diamines as comonomers. In an example, a typical cycloaliphatic diamine is, for example, 3,3' -dimethyl-4,4' diaminodicyclohexylmethane (MACM).

The total thickness of the multilayer polymer membrane provided by the invention is from 500 microns to 1500 microns, preferably from 600 microns to 1000 microns.

The multilayer polymer membrane provided by the invention is particularly suitable for use as a diaphragm for manufacturing shell-shaped dental instruments such as invisible aligners.

In a preferred embodiment of the invention, the multilayer polymer membrane has the following characteristics:
1) one layer of the hard core layer, mainly including at least one amorphous transparent polyamide, the glass transition temperature Tg of the amorphous transparent polyamide being between 125 °Cand 170°C; here, 'at least one' means 'one or more';
2) the hard core layer is located between two soft skin layers. each of the soft skin layers is one layer, and each of the soft skin layers includes at least one thermoplastic polyurethane with a Shore hardness of 50D to 85D; here, 'at least one' means 'one or more'.

According to the preferred embodiment of the invention, the hard core includes one amorphous transparent polyamide; a light transmittance of the amorphous transparent polyamide is greater than 85% (ASTMD1003), and correspondingly a glass transition temperature Tg thereof is between 125°C and 170°C (ISO 11357-1/-2), a tensile strength thereof is greater than 50MPa, a yield strain thereof is greater than or equal to 5% and a tensile modulus thereof is between 1400MPa and 2200MPa (ISO 527). In an alternative embodiment, the hard core layer may include more amorphous transparent polyamides, and properties of a mixture of the more amorphous transparent polyamides meet the above parameter requirements.

According to the preferred embodiment of the invention, the soft skin on each side includes a thermoplastic polyurethane with a Shore hardness of 50D to 85D (ISO 7619-1). Alternatively, the soft skin on one or both sides includes more thermoplastic polyurethanes, each of the polyurethanes has a Shore hardness between 50D and 85D, and further the mixture of the more thermoplastic polyurethanes has a Shore hardness between 50D and 85D (ISO 7619-1).

The thermoplastic polyurethane may be produced by selecting bifunctional diisocyanates and oligomer diols and combining them with small-molecule chain extenders. Oligomer diols generally include polyester diols and polyether diols. Preferably, the oligomer diols are selected from polyether diols. The polyethers have better hydrolysis resistance and are more suitable for making shell-shaped dental instruments such as invisible aligners for use in the oral environment.

In another preferred embodiment of the invention, the multilayer polymer membrane has the following characteristics:
1) one layer of hard core layer, with a material including at least one microcrystalline transparent polyamide having a glass transition temperature Tg between 125°C and 170°C; specifically, when the material of the hard core layer is the microcrystalline transparent polyamide, a glass transition temperature Tg of the microcrystalline transparent polyamide is between 125°C and 170°C; when the material of the hard core layer includes more microcrystalline transparent polyamides, a glass transition temperature Tg of a mixture of the more microcrystalline transparent polyamides is between 125°C and 170°C;
2) the hard core layer is located between two soft skin layers, and the soft skin layer on each side includes at least one thermoplastic polyurethane with a Shore hardness of 50D to 85D. Specifically, when the material of the soft skin layer is one thermoplastic polyurethane, the Shore hardness of the thermoplastic polyurethane is between 50D and 85D; when the material of the hard core layer includes more thermoplastic polyurethanes, the Shore hardness of each of the polyurethanes is respectively between 50D and 85D, and further the Shore hardness of a mixture of the more thermoplastic polyurethanes is between 50D and 85D.

According to the preferred embodiment of the invention, the hard core layer includes one microcrystalline transparent polyamide; it is particularly preferred that a monomer of the polyamide includes alicyclic diamine 4,4 ' - diaminodicyclohexylmethane (PACM), and a crystal grain size of the preferred polyamide does not scatter visible light. The preferred microcrystalline transparent polyamide has a light transmittance of not lower than 85%, and correspondingly, a glass transition temperature Tg thereof is between 125°C and 170°C, a tensile strength thereof is greater than 50MPa, a yield strain thereof is greater than or equal to 5% and a tensile modulus thereof is greater than 1300MPa. In an alternative embodiment, the hard core layer may include more microcrystalline transparent polyamides, and properties of a mixture of the more microcrystalline transparent polyamides meet the above parameter requirements.

In another preferred embodiment of the invention, the multilayer polymer membrane has the following characteristics:
1) one layer of hard core layer, with a material including at least one amorphous transparent polyamide having a glass transition temperature Tg between 125°C and 170°C; specifically, when the material of the hard core layer is the amorphous transparent polyamide, a glass transition temperature Tg of the amorphous transparent polyamide is between 125°C and 170°C; when the material of the hard core layer includes more amorphous transparent polyamides, a glass transition temperature Tg of a mixture of the more amorphous transparent polyamides is between 125°C and 170°C;
2) the hard core layer is located between two soft skin layers, and the soft skin on each side includes at least one polyamide elastomer with a Shore hardness of 50D to 85D. Specifically, when the material of the soft skin layer is one polyamide elastomer, the Shore hardness of the thermoplastic polyurethane polyamide elastomer is between 50D and 85D; when the material of the hard core layer includes more polyamide elastomers, the Shore hardness of each of the polyamide elastomers is respectively between 50D and 85D, and further the Shore hardness of a mixture of the more polyamide elastomers is also between 50D and 85D.

The polyamide elastomer suitable for the skin layer is a block copolymer polymerized by hard segments of polyamides and soft segments of polyesters or polyethers with low glass transition temperature. The soft segment may usually be double-ended hydroxyl polytetramethylene ether (PTMG), polyethylene glycol (PETG), or polypropylene glycol (PPG). The hard segment may usually adopt PA6, PA66, PA11, PA12, PA612 and aromatic polyamides. In the invention, the soft segments of polyethers are preferred, with a Shore hardness of 50D to 85D preferably.

In some embodiments, the transparent polyamides available in the invention may be commercially available, for example Grilamid^{®} from EMS, or Rilsanclear^{®} from Arkema. The microcrystalline polyamides available in the invention are also commercially available, for example TROGAMID^{®} from Evonik. The thermoplastic polyurethanes available in the invention are also commercially available, for example Pellethane^{®} from Lubrizol. The polyamide elastomers available in the invention are also commercially available, for example Pebax^{®} from Arkema, or VESTAMID^{®} from Evonik.

In a preferred embodiment, the multilayer polymer membrane according to the invention consists of a core layer and skin layers, with the core layer located in the middle of the skin layers. Among them,
a thickness of the core layer is 300 microns to 1200 microns, preferably 350-1000 microns, and further preferably 500 microns to 800 microns;
a thickness of the skin layer of a single layer is 20 microns to 150 microns, preferably 40 microns to 90 microns, and further preferably 40 microns to 75 microns;
a total thickness of a three-layer structure composed of the skin layers on both sides and the core layer is 500 microns to 1500 microns, preferably 600 microns to 1000 microns.

Based on any of the above preferred embodiments, the core layer and/or the skin layers may also be selected to be multilayer polymer layers; in order to keep the total thickness of the core layer and the skin layer controllable, the specific thickness of each of the multilayer polymer layers in the core layer and/or skin layers needs to be selected so that the total thickness is preferably within the range defined above.

The invention further provides a manufacturing method for the multilayer polymer membrane, a use and a method of using the multilayer polymer membrane for hot-pressing a molded body, and a molded body obtained by manufacturing.

The multilayer polymer membrane according to the invention may be obtained by thermal lamination, extrusion compounding and multilayer coextrusion. Among them,

The thermal lamination uses multiple membranes of a single layer that have been prepared to prepare multilayer membranes of corresponding thickness under a given temperature and pressure.

The extrusion compounding uses a single-layer flat die (T-die) to extrude the material of the core layer, which, after extrusion, is quickly compounded with the prepared single-layer skin layer by rolling

The multilayer co-extrusion is performed by using multiple screws to melt and transport the polymer particles in the core layer and the skin layers, and then multilayer extrusion and rolling a multi-layer flat die to cool and shape.

The above three preparation methods are known to those skilled in the art, and the specific parameter settings during the preparation process may be selected through experiments based on the performance of the raw materials.

In a preferred solution, the multilayer polymer membrane is prepared using a multilayer co-extrusion production process.

The multilayer polymer membrane of the invention may be used for hot pressing to form the shaped body. Specifically, for example,
the multilayer polymer membrane is thermoformed in sheet form to produce trial samples and final orthodontic appliances. There are many suitable existing processes for the thermoforming process, including but not limited to vacuum negative pressure forming, positive pressure hot pressing forming or a combination of the two, a combination of manual operation and crawler automatic operation.

Taking thermoforming to produce the shell-shaped dental instrument as an example, the mold used for molding is an orthodontic dental mold. The orthodontic dental model may be made through traditional plaster demoulding, or by modern oral scanning to obtain dental data, making adjustments on the software to obtain the target data and then performing 3D print. The multilayer polymer membrane is thermoformed on the orthodontic dental mold, and the thermoformed molded body is then trimmed and polished to form the final product.

Compared with traditional fixed orthodontics, the clear aligner orthodontics may make the orthodontic process more invisible through the selection of materials and processes. The transparency of the multilayer polymer membrane of the invention may meet the requirement of 'invisibility'.

The light transmittance (ASTMD1003) of the multilayer polymer membrane according to the invention is greater than 75%, preferably greater than 80%.

According to a preferred embodiment of the invention, the multilayer polymer membrane may be processed by grinding with one-sided rollers to further reduces possible light reflections, but the light transmittance is still kept to be greater than 80%.

### Use

The multilayer polymer membrane provided by the invention has a flexible skin layer and a hard core layer, and has the characteristics of being transparent and invisible, resistant to environmental stress cracking, having small stress relaxation in a warm and humid use environment, and having high retention force. The multilayer polymer membrane or diaphragm and the molded products thereof are suitable for dental use such as invisible orthodontic appliances and retainers. Dental appliances such as shell-shaped dental instruments may be made by positive pressure or negative pressure thermoforming. The prepared dental appliance has good inter-layer adhesion, excellent light transmittance (greater than 75%), resistance to environmental stress cracking, and high stress retention in a warm and humid environment.

In the description, a range represented by 'between one value and another value' is a way to avoid listing in the specification a summary representation of all values in that range. Therefore, a record of a particular range of values covers the endpoint value of the numerical range and any value within the endpoint value, as well as the smaller numerical range bounded by any value within the numerical range, which is the same as the arbitrary value and the smaller range of values written clearly in the specification.

The following further describes the present invention in combination with specific embodiments. It should be understood that these embodiments are only used for illustrating the present invention, but not for the limitation of the scope of the present invention. Improvements and adjustments made by those skilled in the art according to the invention in practical applications still belong to the protection scope of the invention.

### Embodiment

The invention is further illustrated by the following embodiment, but they should not be construed as limiting the scope or content of the invention in any way.

### (1) Raw materials

Isoplast^{®} 2530 ETPU: Purchased from Lubrizol, an engineering plastic rigid thermoplastic polyurethane, with a glass transition temperature of 93°C, a tensile yield strength of 63MPa, a yield strain of 6%, and a tensile modulus of 1900MPa.

Eastar^{™} Copolyester 6763 copolyester: purchased from Eastman, with a glass transition temperature of 80°C, a tensile yield strength of 52MPa, a yield strain of 4%, and a tensile modulus of 1900MPa.

Tritan^{™} Copolyester TX1000 copolyester: purchased from Eastman, with a glass transition temperature of 110°C, a tensile yield strength of 47MPa, a yield strain of 7%, and a tensile modulus of 1500MPa.

Grilamid^{®} TR90 NAT: purchased from EMS, an amorphous transparent polyamide, with a glass transition temperature of 150°C, a tensile yield strength of 60MPa, a yield strain of 6%, a tensile modulus of 1600MPa, and a light transmittance of about 93%.

TROGAMID^{®} CX7323: purchased from EMS, a microcrystalline transparent polyamide, with a glass transition temperature of 150°C, a tensile yield strength of 60MPa, a yield strain of 6%, a tensile modulus of 1600MPa, and a light transmittance measured as 91.7 %.

Rilsan^{®}ClearG170: purchased from Arkema, an amorphous transparent polyamide, with a glass transition temperature of 168°C, a tensile yield strength of 74MPa, a yield strain of 8%, a tensile modulus of 2020MPa, and a light transmittance measured as 92%.

Borealis PP HC205CF: purchased from Borealis AG, a polypropylene homopolymer with added crystallization nucleating agent, with a tensile yield strength of 35MPa, a yield strain of 8%, and a tensile modulus of 1750MPa.

Pellethane^{®} 2363 65D: purchased from Lubrizol, a thermoplastic polyurethane elastomer, of a polyether type, with a Shore hardness of 62D.

Pellethane^{®} 2363 75D: purchased from Lubrizol, a thermoplastic polyurethane elastomer, of a polyether type, with a Shore hardness of 76D.

Utechllan U.E-64DU10: purchased from Covesro, a thermoplastic polyurethane elastomer, of a polyether type, with a Shore hardness of 66D.

Pebax^{®} 7233 sa01med: purchased from Arkema, a thermoplastic polyamide elastomer, of a polyether type, with a Shore hardness of 61D.

Ecdel^{™} 9966 copolyester elastomer: purchased from Eastman, with a Shore hardness of 55D.

### (2) Preparation of extruded diaphragm

### Extrusion to prepare a single-layered or multi-layered membrane

Production lines for the extruded diaphragm include:
a main extruder, with a diameter of 65mm and an aspect ratio of 38D;
an auxiliary extruder (an auxiliary machine), with a diameter of 45mm and an aspect ratio of 33D;
a melt pump;
a three-layer co-extrusion flat die with a width of 500mm;
a three-roller roll forming unit;
a cooling roller unit;
a trimming and waste edge rewinding device;
a tractor;
a winding machine;
an electrical control system.

After dehumidification and drying, the granules are transported to the extruder, plasticized and melted to be extruded through the die, and passed through the three-roller roll forming unit (mirror steel roller or/and frosted steel roller) to obtain a diaphragm with a corresponding thickness, and cooled to shape, which is then dragged, cut and wound to obtain a diaphragm product.

### (3) Preparation of molded body

The prepared single-layered or multi-layered polymer membranes are punched out into discs by using the high-speed rail inspection's air-pressure automatic slicer GT-7016-AR3 with a 120mm diameter circular cutter. Then, the prepared dental mold is used on the ERKOFORM-3d+ laminating machine of the German ERKODENT^{®} company, and an invisible aligner molded body is prepared by baking and hot pressing and then is trimmed and polished to form a final product.

### (4) Embodiment and Comparative Examples

### Comparative Example 1

Using the above extrusion line, the single-component rigid thermoplastic polyurethane Isoplast^{®} 2530 is used, and the temperature of the main extruder is set at 220°C-245°C, to extrude a 0.76mm diaphragm.

### Comparative Example 2

Using the above extrusion line, the single-component copolyester (Eastar6763) is used, and the temperature of the main extruder is set at 240°C-260°C, to extrude a 0.8mm diaphragm.

### Comparative Example 3

Using the above extrusion line, the temperature of the main extruder is set at 240°C-260°C, and a copolyester Eastar 6763 is used; the temperature of the auxiliary extruder is set at 205°C-235°C, the Pellethane^{®} 2363 65D is used, and a 0.8mm thick diaphragm with TPU/PETG/TPU structure is produced by extrusion, wherein the thickness of TPU on each side is 75 microns.

### Comparative Example 4

Using the above extrusion line, the temperature of the auxiliary extruder is set at 240°C-260°C, and a copolyester Eastar 6763 is used; the temperature of the main extruder is set at 205°C-235°C, the Pellethane^{®} 2363 65D is used, and a 0.8mm thick diaphragm with PETG/TPU/PETG structure is produced by extrusion, wherein the thickness of TPU of the core layer is 150 microns.

### Comparative Example 5

Using the above extrusion line, the temperature of the main extruder is set at 220°C-260°C, and a copolyester Tritan TX1000 is used; the temperature of the auxiliary extruder is set at 205°C-240°C, the thermoplastic polyurethane Pellethane^{®} 2363 65D is used, and a 0.8mm thick diaphragm with TPU/Tritan/TPU structure is produced by extrusion, wherein the thickness of TPU on both sides is 75 microns.

### Comparative Example 6

Using the above extrusion line, the Grilamid^{®} TR90 is used to make a 0.8mm single-layered transparent nylon diaphragm, and then a high-speed rail detection GT-7014-P hot press is used to make a 100-micron-thick Ecdel^{™} 9966 copolyester elastomer membrane. The above two are combined at 210°C and 0.2MPa to obtain a multilayer diaphragm with a transparent nylon core layer of 0.62mm and a copolyester elastomer skin layer of 90 microns.

### Comparative Example 7

Using the above extrusion line, the temperature of the main extruder is set at 200°C-230°C, and the temperature of the auxiliary extruder is set at 200°C-230°C. The core layer is made of the Borealis PP HC205CF, a polypropylene homopolymer with added crystallization nucleating agent, and the skin layer is made of the thermoplastic polyurethane Pellethane^{®} 2363 75D. A multilayer composite diaphragm with a total thickness of 0.8mm is produced, with a thickness of the core layer of 0.68mm and a thickness of the skin layer of 60 microns.

### Embodiment 1

Using the above extrusion line, the core layer is made of the amorphous transparent polyamide Grilamid^{®} TR90, and the skin layer is made of the thermoplastic polyurethane Pellethane^{®} 2363 65D. The temperature of the main extruder is set at 220°C-260°C, and the temperature of the auxiliary extruder is set at 205°C-240°C. A multilayer composite diaphragm with a total thickness of 0.8mm is produced by extrusion, with a thickness of the core layer of 0.64mm and thicknesses of the skin layers of 60 microns and 80 microns respectively.

### Embodiment 2

Using the above extrusion line, the core layer is made of the amorphous transparent polyamide Grilamid^{®} TR90, and the skin layer is made of the thermoplastic polyurethane Pellethane^{®} 2363 75D. The temperature of the main extruder is set at 220°C-260°C, and the temperature of the auxiliary extruder is set at 205°C-240°C. A multilayer composite diaphragm with a total thickness of 0.8mm is produced by extrusion, with a thickness of the core layer of 0.66mm and a thickness of the skin layer of 70 microns.

### Embodiment 3

Using the above extrusion line, the second roller is replaced with a metal grind roller. The temperature of the main extruder is set at 220°C-260°C, and the temperature of the auxiliary extruder is set at 205°C-240°C. The core layer is made of the amorphous transparent polyamide Grilamid^{®} TR90, and the skin layer is made of the thermoplastic polyurethane Pellethane^{®} 2363 75D. A multilayer grind composite diaphragm with a total thickness of 0.8mm is produced by extrusion, with a thickness of the core layer of 0.66mm and a thickness of the skin layer of 70 microns.

### Embodiment 4

Using the above extrusion line, the core layer is made of the amorphous transparent polyamide Grilamid^{®} TR90, and the skin layers are symmetrically made of the polyether thermoplastic polyamide elastomer Pebax^{®} 7233. The temperature of the main extruder is set at 220°C-260°C, and the temperature of the auxiliary extruder is set at 220°C-250°C. A multilayer composite diaphragm with a total thickness of 0.76mm is produced, with a thickness of the core layer of 0.58mm and a thickness of the skin layer of 90 microns.

### Embodiment 5

Using the above extrusion line, the core layer is made of the microcrystalline transparent polyamide TROGAMID^{®} CX7323, and the skin layer is made of the thermoplastic polyurethane Pellethane^{®} 2363 75D. The temperature of the main extruder is set at 230°C-265°C, and the temperature of the auxiliary extruder is set at 205°C-240°C. A multilayer composite diaphragm with a total thickness of 0.8mm is produced, with a thickness of the core layer of 0.65mm and a thickness of the skin layer of 75 microns.

### Embodiment 6

Using the above extrusion line, the core layer is made of the amorphous transparent polyamide Grilamid^{®} TR90, and the skin layer is made of the thermoplastic polyurethane Utechllan U.E-64DU10. The temperature of the main extruder is set at 220°C-260°C, and the temperature of the auxiliary extruder is set at 205°C-235°C. A multilayer composite diaphragm with a total thickness of 0.75mm is produced, with the transparent nylon of the core layer of 0.62mm, and those of the skin layers of 65 microns respectively.

### Embodiment 7

Using the above extrusion line, the amorphous transparent polyamide Rilsan^{®}Clear G170 is used, the temperature is set at 220°C-260°C, to produce a 0.76mm single-layered transparent nylon diaphragm. Similarly, using the line, the thermoplastic polyurethane Pellethane^{®} 2363 75D is used, and the temperature is set at 200°C-235°C, to produce a membrane with a thickness of 0.1mm; and then, the high-speed rail inspection GT-7014-P hot press is used to compound and produce a 0.73mm thick multi-layered diaphragm at 215°C and 0.2MPa, wherein a thickness of the core layer is 0.6mm and thicknesses of the skin layers are 65 microns respectively. (5) Performance test

### 1. Interlayer adhesion test for multilayer diaphragm where the core layer is a hard polymer

The test range includes Comparative Example 3, Comparative Examples 5-7, and Embodiments 1-7.

Test method: drawing on the ISO 2409 Cross-Cut, the Elcometer 1542 Cross-Cut Adhesion Tester is used to cut through the skin, and then the corresponding tape is used to adhere and peel off. According to the severity of peeling, it is graded from 0 (no separation at all) to 5 (more than 65% of the cut area is affected).

### Test results:

The results of Comparative Examples 3 and 5 and Embodiments 1-7 are 0, and the results of Comparative Examples 6 and 7 are 5.

These results show that very good interlayer adhesion may be achieved with three-layer diaphragm containing the transparent polyamide core layer and thermoplastic polyurethane and nylon elastomers (Embodiments 1 to 7). The results of Comparative Example 6 and Comparative Example 7 show that if the polymer types of the core layer and the skin layer are not matched appropriately, they will easily peel off from each other, which will lead to the risk of delamination in subsequent processes and uses, such as polishing and immersion. It can be seen that for polymer multilayer membrane products, the material selection of the core layer and the skin layer needs to consider the interlayer bonding force between the two components, and cannot be simply selected and arbitrarily matched based on the required requirements in performance of the core layer and the skin layer, because basic physical properties between materials, such as polarity, etc., will lead to poor interlayer bonding, which instead leads to substandard or unexpected failure of the final product.

Judging from the above test results, the thermoplastic polyurethane has very good adhesion to the copolyester and the transparent polyamide. However, if the selected material combination of the elastomers for the core layer and the skin layer is inappropriate (such as in Comparative Example 6), or if the skin layer is made of the thermoplastic polyurethane and the core layer is made of the highly-transparent polypropylene (such as in Comparative Example 7), it is still difficult to avoid the risk of delamination during use even if the lamination is used, which instead will result in product failure or unexpected failure.

### 2. Light transmittance of multilayer diaphragms prepared by Embodiments 1 to 7

### Test method: ASTM D1003, Test Equipment of BYK Haze-gard plus.

The test results are shown in Table 1 below.

**Table 1**

| Embodiment | 1 | 2 | 3 | 4 | 5 | 6 | 7 |
|---|---|---|---|---|---|---|---|
| Transmittance (%) | 92.3 | 92.1 | 90.8 | 88.4 | 91.5 | 92.2 | 91.3 |

From the test results in Table 1, it can be seen that even if one side is ground (Embodiment 3) or the skin layer is made of translucent polyamide elastomer (Embodiment 4), the multilayer diaphragms prepared in these embodiments have very high light transmittance and are suitable for the manufacture of invisible dental diaphragms.

### 3. Stress cracking resistance test

### Test method:

An 80mm*20mm rectangular sample strip is cut along an MD direction of the sample and fixed on a stainless steel semicircular tile with a diameter of 60mm. The fixed device is placed into distilled water, artificial saliva (Phygene^{®} PH1843) or LISTERINE COOL MINT MOUTHWASH for keeping at a constant temperature of 37°C for 24 hours. After loosening the sample strip, it is washed with distilled water, dried with absorbent paper and placed on the experimental table for observation. Figure 2 is a schematic diagram of a diaphragm with obvious microcracks. Test results of the stress cracking resistance test are expressed from 0 to 5. 0 means 'intact after being treated by bending stress', 5 means 'severe and dense cracks after treatment'.

The test results are shown in Table 2 below.

**Table 2**

| | Comparative Example | | | | | Embodiment | | | | | | |
|---|---|---|---|---|---|---|---|---|---|---|---|---|
| Group | 1 | 2 | 3 | 4 | 5 | 1 | 2 | 3 | 4 | 5 | 6 | 7 |
| Distilled water | 0 | 5 | 0 | 2 | 0 | 0 | 0 | 0 | 0 | 0 | 0 | 0 |
| Artificial saliva | 0 | 5 | 0 | 2 | 0 | 0 | 0 | 0 | 0 | 0 | 0 | 0 |
| Mouthwash | 0 | 5 | 0 | 3 | 0 | 0 | 0 | 0 | 0 | 0 | 0 | 0 |

Judging from the test results shown in Table 2 above, the multilayer systems (Embodiments 1 to 7) using the transparent polyamide as the core layer have very good stress cracking resistance. Comparative Examples 1-5 have different results, wherein Comparative Example 1 is TPU and has no problem in stress cracking resistance. Comparative Examples 2 to 5 using the polyester copolymer show different results. In Comparative Example 2, the single-layered PETG shows obvious microcracks regardless of whether it was exposed to distilled water, artificial saliva or mouthwash; in the PETG/TPU/PETG structure of Comparative Example 4, there is a flexible elastomer TPU in the middle for buffering so that the stress cracking resistance is improved, but the microcracks still appear; Comparative Examples 3 and 5 use TPU as the protective surface layer for the skin layer and the polyester copolymer as the core layer, and the produced products may also significantly improve problems in stress cracking for the polyester copolymer in warm solutions.

### 4. Initial stress test and stress retention experiment

The test range includes Comparative Examples 1, 3 and 5, and Embodiments 1-7. However, Comparative Examples 2 and 4 have poor stress cracking resistance, and Comparative Examples 6 and 7 have insufficient interlayer bonding force, so the test is not conducted for these comparative examples.

Test method: the diaphragm is cut into type 5 sample strips corresponding to GB/T 1040.1-2006; the corresponding sample strips are soaked in water at 37°C for 24 hours; the Zwick Z010 tensile testing machine is used to conduct the stress relaxation/maintenance experiment with a water bath, and the 37°C-constant-temperature water bath device refers to the patent CN202092909U; after the tensile displacement reaches 2mm, corresponding stresses (MPa) at 0H, 1H, 3H, 6H, 9H, and 12H are recorded and converted into stress/load retention percentage. The calculation results are shown in Table 3 below.

**Table 3**

| | Comparative Example | | | Embodiment | | | | | | |
|---|---|---|---|---|---|---|---|---|---|---|
| Group | 1 | 3 | 5 | 1 | 2 | 3 | 4 | 5 | 6 | 7 |
| 0H | 100 % | 100 % | 100 % | 100 % | 100 % | 100 % | 100 % | 100 % | 100 % | 100 % |
| 1H | 45% | 69% | 80% | 83% | 86% | 84% | 85% | 82% | 81% | 79% |
| 3H | 23% | 59% | 76% | 79% | 83% | 83% | 81% | 78% | 78% | 73% |
| 6H | 16% | 52% | 71% | 76% | 81% | 81% | 79% | 75% | 75% | 70% |
| 9H | 14% | 48% | 70% | 75% | 80% | 79% | 77% | 73% | 74% | 67% |
| 12H | 12% | 44% | 69% | 74% | 79% | 78% | 76% | 72% | 73% | 66% |

From the calculation results of stress/load retention percentage in Table 3 above, it can be seen that the multilayer diaphragms with the transparent polyamide as the core layer (Embodiments 1 to 7) shows very good stress retention after 12 hours, as compared with the single-layered TPU (Comparative Example 1) and the TPU/PETG/TPU structure (Comparative Example 3). Among them,

Comparative Example 1 is a TPU single-layered membrane; although it has good stress cracking resistance, the stress fades quickly under warm and humid conditions, and the actual stress retention over a long period of time is low, which is only more than ten percent.

Comparative Example 3 and Comparative Example 5 use different polyester copolymers, and the corresponding core layers have glass transition temperatures Tg of 80°C and 110°C respectively.

Taking the transparent polyamide of Embodiment 1/2 as an example, the corresponding core layer has Tg of 150°C. The transparent polyamide is further subjected to saturated water absorption treatment (ISO 62, using the method of placing at 23°C for many days), and the corresponding Tg is still as high as 128°C.

It can be seen that the transparent polyamide and the transparent polyamide in other embodiments may reduce the affects of stress relaxation caused by movements of molecular chains under warm and humid conditions. Embodiments 1-7 all show excellent stress/load retention percentages, wherein Embodiments 1-6 are all better than the comparative example-Comparative Example 5-with the best results; although the results of Embodiment 7 are slightly smaller than those of Comparative Example 5, they are at a comparable level; the data of Embodiment 7 still has quite outstanding advantages compared with Comparative Example 1 (PETG) and Comparative Example 3 (TPU) used as commonly used diaphragms.

In addition to the stress/load retention percentage, the remaining stress/load after long-term wear is also an important indicator in the clear aligner invisible orthodontics, which affects the efficiency of orthodontics. Fig. 3 is the stress retention curve corresponding to Comparative Example 3 (TPU/PETG/TPU multilayer diaphragm), Comparative Example 5 (TPU/Tritan/TPU) and Embodiment 2.

From Fig. 3, it can be seen that compared with Comparative Example 3 and Comparative Example 5, the transparent nylon three-layered composite diaphragm used in Embodiment 2 maintains higher stress over a long period of time, and has a comparable initial stress to Comparative Example 5. Although Comparative Example 3 has a higher initial stress, the stress decays faster within the same time, and the stress retention is not high.

Therefore, it can seen that the multilayer polymer membrane provided by the invention has appropriate initial stress and high and stable stress retention under the moist conditions of the oral cavity.

In summary, the multilayer polymer membrane provided by the invention comprehensively considers factors such as high transparency, resistance to environmental stress cracking, and sufficient initial stress, low stress relaxation and high retention force in a warm environment in the selection and matching of interlayer polymers, so that the membrane is ultimately suitable for the preparation of dental diaphragms and dental invisible aligners and other products.

Under the teachings of the invention and the above embodiments, those skilled in the art can easily foresee that each of the raw materials or their equivalent substitutes, each processing method or their equivalent substitutes listed or exemplified in the invention can realize the invention, and the invention may be realized with the upper and lower limits and interval values of the parameters of each raw material and processing method. Embodiments will not be listed one by one here.

## Claims

1. A multilayer polymer membrane, comprising a hard core layer and soft skin layers respectively located on both sides of the hard core layer, wherein:
the hard core layer comprises one or more polymer layers, a material of each of the polymer layers of the hard core layer comprises one or more transparent polyamides, and the transparent polyamide is selected from amorphous transparent polyamide or microcrystalline transparent polyamide, a glass transition temperature Tg of the transparent polyamide of each layer being between 100°C and 200°C;
each of the soft skin layers comprises one or more polymer layer, and a material of each of the polymer layers of each of the soft skin layer comprises one or more thermoplastic polyurethanes with a Shore hardness of 50D-85D, or one or more polyamide elastomers with a Shore hardness of 50D-85D.

2. The multilayer polymer membrane according to claim 1, wherein the glass transition temperature Tg of the transparent polyamide of each layer is between 110°C and 170°C.

3. The multilayer polymer membrane according to claim 1, wherein the glass transition temperature Tg of the transparent polyamide of each layer is between 125°C and 170°C.

4. The multilayer polymer membrane according to claim 1, wherein the transparent polyamide has a light transmittance of greater than 75%, a tensile yield strength greater than 50MPa, a yield strain greater than or equal to 5%, and a tensile modulus greater than 1300MPa.

5. The multilayer polymer membrane according to claim 1, wherein the transparent polyamide has a light transmittance of greater than 80%.

6. The multilayer polymer membrane according to claim 1, wherein the multilayer polymer membrane is processed by grinding with one-sided rollers.

7. The multilayer polymer membrane according to claim 1, wherein the hard core layer has a total thickness of 300-1200 microns, and each of the soft skin layers has a thickness of 20-150 microns.

8. The multilayer polymer membrane according to claim 7, wherein the hard core layer has a total thickness of 350-1000 microns, and each of the soft skin layers has a thickness of 40-90 microns.

9. The multilayer polymer membrane according to claim 8, wherein the hard core layer has a total thickness of 500-800 microns, and each of the soft skin layers has a thickness of 40-75 microns.

10. The multilayer polymer membrane according to claim 1, wherein a total thickness of a layered structure composed of the hard core layer and the soft skin layers on both sides is from 500 microns to 1500 microns.

11. The multilayer polymer membrane according to claim 1, wherein a total thickness of the layered structure composed of the hard core layer and the soft skin layers on both sides is from 600 microns to 1000 microns.

12. The multilayer polymer membrane according to claim 1, wherein the multilayer polymer membrane is a diaphragm used to prepare a shell-shaped dental instrument.

13. A manufacturing method for the multilayer polymer membrane according to any one of claims 1 to 12, comprises preparing the multilayer polymer membrane by thermal lamination, extrusion compounding or multi-layer co-extrusion.

14. A use of the multilayer polymer membrane according to any one of claims 1 to 12 for producing a molded body by hot pressing.

15. The use of the multilayer polymer membrane for producing a molded body by hot pressing according to claim 14, wherein the molded body is the shell-shaped dental instrument.

16. A molded body manufactured by hot pressing, prepared by using the multilayer polymer membrane according to any one of claims 1 to 12.

17. The molded body according to claim 16, wherein the molded body is the shell-shaped dental instrument.

18. A manufacturing method for the molded body according to claim 16 or 17, comprising basically steps of:
i) preparing the multilayer polymer membrane through a multilayer co-extrusion or extrusion compounding process;
ii) performing vacuum hot-pressing and/or positive-pressure hot-pressing on the multilayer polymer membrane to obtain the molded body;
iii) trimming and grinding the molded body.
